# EUROPÄISCHE PATENTANMELDUNG

(11) **EP 3 715 997 A2**
(43) Veröffentlichungstag der Anmeldung: **30.09.2020**
(21) Anmeldenummer: 20157284.9
(22) Anmeldetag: 14.02.2020
(51) Int. Cl.: G05F 1/563

(54) **SCHALTREGLERSCHALTUNG, FELDGERÄT UND VERFAHREN ZUR STROMVERSORGUNG**

(30) Priorität: 26.03.2019 DE 102019107761
(71) Anmelder: Endress + Hauser Conducta GmbH+Co. KG, 70839 Gerlingen (DE)
(72) Erfinder: Haase, Björn, 70499 Stuttgart (DE); Schmittner, Manuel, 73776 Altbach (DE)
(74) Vertreter: Andres, Angelika Maria

(57) **Zusammenfassung**

Die Erfindung offenbart eine Schaltreglerschaltung (1), umfassend: einen Längsregler (2) mit zumindest einem Regeltransistor (T) mit den Anschlüssen Kollektor (C), Basis (B) und Emitter (E); und ein DC-DC-Wandler (3), insbesondere ein Abwärtswandler, der dem Längsregler (2) nachgeschaltet ist, wobei die Schaltreglerschaltung (1) so ausgestaltet ist, dass der DC-DC-Wandler (3) auf einen konstanten Kollektor-Emitter-Spannungsabfall (UCE) am Regeltransistor geregelt wird, insbesondere wird der DC-DC-Wandler (3) so aktiviert, dass sich ein konstanter Kollektor-Emitter-Spannungsabfall (UCE) ergibt.

## Beschreibung

Die Erfindung betrifft eine Schaltreglerschaltung und ein Feldgerät mit einer Schaltreglerschaltung sowie ein Verfahren zur Stromversorgung eines Feldgeräts.

Ein Feldgerät ist eine technische Einrichtung im Bereich der Automatisierungstechnik, die mit einem Produktionsprozess in direkter Beziehung steht. "Feld" bezeichnet in der Automatisierungstechnik den Bereich außerhalb von Schaltschränken bzw. Leitwarten. Feldgeräte können somit sowohl Aktoren (Stellglieder, Ventile etc.) als auch Sensoren oder Messumformer in der Fabrik- und Prozessautomation sein.

Im Allgemeinen ist Messumformer ein Gerät, das eine Eingangsgröße entsprechend einer festen Beziehung in eine Ausgangsgröße umformt. Häufig wird auch der englische Begriff Transmitter verwendet. Hier ist beispielsweise das Produkt "Liquiline M CM42" der Anmelderin zu nennen, als ein Beispiel für einen Messumformer für pH-/Redox-, Leitfähigkeits- oder Sauerstoffmessungen in Anwendungen der Prozessautomatisierung.

Der Messumformer kann als Zweileitermessumformer (auch Zweidraht genannt) mit einem 4..20 mA Signal ausgestaltet sein (Stromsignale nach DIN IEC 60381-1). Bei diesen Systemen wird die Ausgangsgröße analog in einem Stromwert kodiert übermittelt. Vielfach wird in diesen Systemen auch eine digitale Feldbuskommunikation nach dem HART-Standard eingesetzt.

Der Messumformer beinhaltet ein oder mehrere Schaltregler zur Stromversorgung von den Schaltregler nachfolgenden Schaltungsteilen, beispielsweise eine Schaltung zur Kommunikation, einen Mikrocontroller oder zur Weiterleitung an einen an den Messumformer angeschlossenen Sensor.

Schaltreglerschaltungen in Zweidraht-Transmittern müssen die Anforderungen erfüllen einer hohen Effizienz, insbesondere bei einem 3,6 mA Fehlerstrom und kleinster Eingangsspannung (z.B. 12 V), Rückwirkungsfreiheit auf den HART-Feldbus, Stabilität im Betrieb auch bei Ansteuerung großer Energiepuffer und bei einem großem Eingangsspannungsbereich, z.B. 12V bis 60V, sowie bei extremen Störsignalen auf den Versorgungsleitungen. Zudem muss es möglich sein, dass verfügbare Überleistungen verlässlich entnommen werden können (z.B. muss bei 30 V Betriebsspannung und 22 mA Schleifenstrom mehr Leistung entnommen werden können, als die Transmitterschaltung tatsächlich verbraucht). Es ist zu berücksichtigen, dass der Transmitter gegebenenfalls in ein Explosionsschutzkonzept integriert werden muss.

Eine Anforderung besteht darin, dass die Energieversorgungsschaltung dem Schaltungssystem oft auch einen Energiepuffer bereitstellen muss, um zumindest kurzzeitig auch Betriebsmodi unterstützen zu können, welche aus dem Energiebudget von z.B. 3.6 mA bei 12 V nicht versorgt werden können, z.B. beim Löschen von Flash-Speichern.

Der Erfindung liegt die Aufgabe zugrunde, eine Schaltreglerschaltung bereit zu stellen, die die Nachteile des Standes der Technik überwindet. Die Schaltreglerschaltung soll also energieeffizient, gegebenenfalls eigensicher, ausgestaltet sein, und immer ausreichend Leistung zur Verfügung stellen und der Transmitterschaltung gegebenenfalls auch einen Energiepuffer für transiente Spitzenströme bereitstellen.

Die Aufgabe wird gelöst durch eine Schaltreglerschaltung, umfassend: einen Längsregler mit zumindest einen Regeltransistor mit den Anschlüssen Kollektor, Basis und Emitter, und einem DC-DC-Wandler, insbesondere ein Abwärtswandler, der dem Längsregler nachgeschaltet ist, wobei die Schaltreglerschaltung so ausgestaltet ist, dass der DC-DC-Wandler auf einen konstanten Kollektor-Emitter-Spannungsabfall am Regeltransistor geregelt wird, insbesondere wird der DC-DC-Wandler so aktiviert, dass sich ein konstanter Kollektor-Emitter-Spannungsabfall ergibt.

Üblicherweise werden DC-DC-Wandler im Anwendungskontext der Erfindung als integrierte Schaltkreise eingesetzt unter Verwendung von Spulen. Üblicherweise werden diese Wandler-Schaltkreise dabei in einem Betriebsmodus verwendet, in welchem auf eine konstante Ausgangsspannung ausgeregelt wird. Zu diesem Zweck verfügen diese DC-DC-Wandler-Schaltkreise über einen Steuersignaleingang (Spannungs-Rückkopplungs-Eingang), welcher über die am Ausgang des DC/DC-Wandlers anliegende Ausgangsspannung rückgekoppelt wird. Der DC-DC-Wandler kann so die Ausgangsspannung auf den gewünschten konstanten Wert ausregeln.

Im Fall von sogenannten Hysteresewandlern erfolgt die Regelung dadurch, dass beim Erkennen einer Unterspannung am Ausgang der Wandler aktiviert wird (und Energie an den Ausgang übermittelt wird) und der Regler beim Überschreiten des Sollwerts (mit einer gewissen Hysterese) wieder abgeschaltet wird.

Im Fall der vorliegenden Anmeldung ist der DC-DC-Wandler jedoch abweichend so verschaltet, dass er zweckentfremdet nicht auf eine konstante Ausgangsspannung ausgeregelt wird, sondern auf einen konstanten Spannungsabfall an dem Eingang des DC/DC-Wandlers vorgeschalteten Längsregler.

Für die Wirkungsgradeffizienz der Auslegung eines DC-DC-Wandlers sind viele Teilkomponenten zu berücksichtigen. Dies beinhaltet insbesondere die Auswahl der Spulen und deren zugehörige Sättigungsströme, der Ferritmaterialien und der im Wandlerbetrieb verwendeten Arbeitsströme. Diese Teilkomponenten müssen für einen optimalen Wirkungsgrad aufeinander abgestimmt werden, so dass z.B. der Magnetisierungsstrom in der Spule den bezüglich des Wirkungsgrads optimalen Wert annimmt. Im Kontext dieser Anmeldung bedeutet der Begriff "Arbeitsstrom" die Auslegung des in die Spulen eingebrachten DC/DC-Wandlers.

Der Transistor im Längsregler (im Folgenden auch Regeltransistor genannt) kann als Bipolartransistor oder als Feldeffekttransistor (Unipolartransistor) ausgestaltet sein. Im Sinne dieser Anmeldung soll immer, wenn von einem Transistor die Rede ist, ein Bipolar- oder Unipolartransistor gemeint sein. Entsprechend soll Basis als Gate, Kollektor als Drain und Emitter als Source im Falle vom Feldeffekttransistor bezeichnet sein.

Eine Ausgestaltung sieht vor: einen Komparator, wobei der Komparator den Kollektor-Emitter-Spannungsabfall am Regeltransistor mit einem Sollwert vergleicht und ein Ausgang des Komparators mit einem Steuereingang des DC-DC-Wandlers verbunden ist.

Eine Ausgestaltung sieht vor: einen Komparator mit zwei Eingängen, wobei der eine Eingang mit dem Kollektor verbunden ist, und der andere Eingang mit dem Emitter des Regeltransistors verbunden ist, und einem Ausgang, wobei der Ausgang des Komparators mit einem Steuereingang des DC-DC-Wandlers verbunden ist.
wobei der Komparator den Spannungsabfall am Regeltransistor mit einem Sollwert vergleicht

Eine Ausgestaltung sieht vor: einen Mikrocontroller, der einen Sollwert für den Kollektor-Emitter-Spannungsabfall vorgibt und an den Komparator leitet, und Vergleichen des Sollwerts des Kollektor-Emitter-Spannungsabfalls mit dem tatsächlichen Kollektor-Emitter-Spannungsabfall, insbesondere wird der Sollwert für den Kollektor-Emitter-Spannungsabfall vom Spannungswert an einem Eingang des Komparators abgezogen.

Eine Ausgestaltung sieht vor, dass der Sollwert für den Kollektor-Emitter-Spannungsabfall einstellbar ist. Der DC-DC-Wandler wird somit im Betrieb zwischen zwei Betriebsmodi für kleine Leistung und hoher verfügbarer Leistung umgeschaltet.

Eine Ausgestaltung sieht vor, dass der Steuereingang des DC-DC-Wandlers als Spannungs-Rückkopplungs-Steuereingang ausgestaltet ist.

Eine Ausgestaltung sieht vor: einen Kondensator, der dem DC-DC-Wandler nachgeschaltet ist.

Eine Ausgestaltung sieht vor: eine Spannungsbegrenzung, insbesondere eine Z-Diode, die dem DC-DC-Wandler nachgeschaltet ist.
Eine Ausgestaltung sieht vor, dass der DC-DC-Wandler einen Eingang zum Einstellen des maximalen Arbeitsstroms des DC-DC-Wandlers umfasst.

Eine Ausgestaltung sieht vor, dass: einen zweiten Komparator mit zwei Eingängen und einem Ausgang, wobei der Komparator den Spannungsabfall am Regeltransistor mit einem zweiten Sollwert, und eine Energie-Entnahmeschaltung, wobei der Ausgang des Komparators mit der Energie-Entnahmeschaltung verbunden ist.

Eine Ausgestaltung sieht vor: einen zweiten Komparator mit zwei Eingängen, wobei der eine Eingang mit dem Kollektor verbunden ist, und der andere Eingang mit dem Emitter verbunden ist, und einem Ausgang, und eine Energie-Entnahmeschaltung, wobei der Ausgang des Komparators mit der Energie-Entnahmeschaltung verbunden ist und der zweite Komparator so ausgestaltet ist, dass die Energie-Entnahmeschaltung in Abhängigkeit von einer zweiten Sollspannung für den Kollektor-Emitter-Spannungsabfall gesteuert wird.

Eine Ausgestaltung sieht vor, dass die Energie-Entnahmeschaltung als zweiter DC-DC-Wandler ausgestaltet ist.

Eine Ausgestaltung sieht vor, dass der Längsregler als Kaskodenschaltung ausgeführt ist, d.h. dass an Stelle eines Regeltransistors eine Schaltungstopologie mit zwei Regeltransistoren zum Einsatz kommt.

Eine Ausgestaltung sieht vor, dass der erste und/oder der zweite Komparator als diskret aufgebauter Differenzverstärker ausgestaltet ist.

Eine Ausgestaltung sieht vor, dass der erste und/oder der zweite DC-DC-Wandler als Hysteresewandler ausgestaltet ist.

Eine Ausgestaltung sieht vor, dass der erste und/oder der zweite DC-DC-Wandler eine galvanische Trennung der Ausgangsspannung aufweist.

Die Aufgabe wird weiter gelöst durch ein Feldgerät, insbesondere einen Messumformer, umfassend ein Schaltreglerschaltung wie oben beschrieben.

Eine Ausgestaltung sieht vor, dass das Feldgerät als Zweileiter-Feldgerät, insbesondere als Zweileiter-Messumformer ausgestaltet ist.

Die Aufgabe wird weiter gelöst durch ein Verfahren zur Stromversorgung eines Feldgeräts, umfassend die Schritte Setzen eines Sollwerts für einen Kollektor-Emitter-Spannungsabfall eines Längsreglers, und Regeln eines DC-DC-Wandlers, insbesondere eines Abwärtswandlers, auf einen konstanten Kollektor-Emitter-Spannungsabfall am Längsregler, insbesondere Aktivieren des DC-DC-Wandlers so dass sich ein konstanter Kollektor-Emitter-Spannungsabfall ergibt.

Eine Ausgestaltung sieht vor, dass der Kollektor-Emitter-Spannungsabfall in Abhängigkeit von einem Strom in die Basis oder dem Emitter des Längsreglers eingestellt wird. Findet die Schaltung Anwendung in einem Zweileitergerät, entspricht dies dem aufgeprägten Strom, also dem Schleifenstrom.

Eine Ausgestaltung sieht vor, dass der Kollektor-Emitter-Spannungsabfall in Abhängigkeit von einem in den Strom in die Basis oder dem Emitter des Längsreglers aufgeprägten Signals abhängig ist. Findet die Schaltung Anwendung in einem Zweileitergerät, entspricht dies dem auf den Schleifenstrom aufgeprägten analogen oder digitalen Signal, etwa dem HART-Signal.

Eine Ausgestaltung sieht den Schritt vor: Vergleichen des Sollwerts des Kollektor-Emitter-Spannungsabfalls mit dem tatsächlichen Kollektor-Emitter-Spannungsabfall, wobei insbesondere der Sollwert vom Spannungswert an einem Eingang des Komparators abgezogen wird.

Eine Ausgestaltung sieht den Schritt vor: Einstellen des maximalen Ausgangsstroms am DC-DC-Wandler in Abhängigkeit von einem Strom in die Basis oder dem Emitter des Längsreglers und/oder in Abhängigkeit von einem in den Strom in die Basis des Längsreglers aufgeprägten Signals.

Eine Ausgestaltung sieht vor: Steuern einer Energie-Entnahmeschaltung in Abhängigkeit von einer zweiten Sollspannung für den Kollektor-Emitter-Spannungsabfall.

Eine Ausgestaltung sieht vor, dass: Aufladen eines Energiespeichers durch den und/oder die DC-DC-Wandler.

Eine Ausgestaltung sieht vor: Begrenzen der Spannung über dem und/oder den DC-DC-Wandlern.

Dies wird anhand der nachfolgenden Figuren näherer erläutert.
- Fig. 1: zeigt ein Blockschaltbild der Schaltreglerschaltung.
- Fig. 2: zeigt eine Ausgestaltung der Schaltreglerschaltung.
- Fig. 3: zeigt eine Ausgestaltung der Schaltreglerschaltung.
- Fig. 4: zeigt eine Ausgestaltung eines Transmitters mit der Schaltreglerschaltung

In den Figuren sind gleiche Merkmale mit gleichen Bezugszeichen gekennzeichnet.

Die Schaltreglerschaltung 1 findet Anwendung in einem Messumformer 100, insbesondere einem Zweidraht-Messumformer. Der Messumformer 100 wird somit über die zwei Leitungen mit Energie versorgt und auch die Kommunikation erfolgt über die beiden Leitungen. Dies kann analog erfolgen über 4..20 mA, aber auch digital mittels HART-Signalen. Erfolgt die Kommunikation analog wird ein Strom gestellt, im Sinne dieser Anmeldung ist dieser Strom mit "I_{Loop}" bezeichnet. Eine der beiden Leitungen des Zweileiters ist mit "In" in den Figuren bezeichnet.

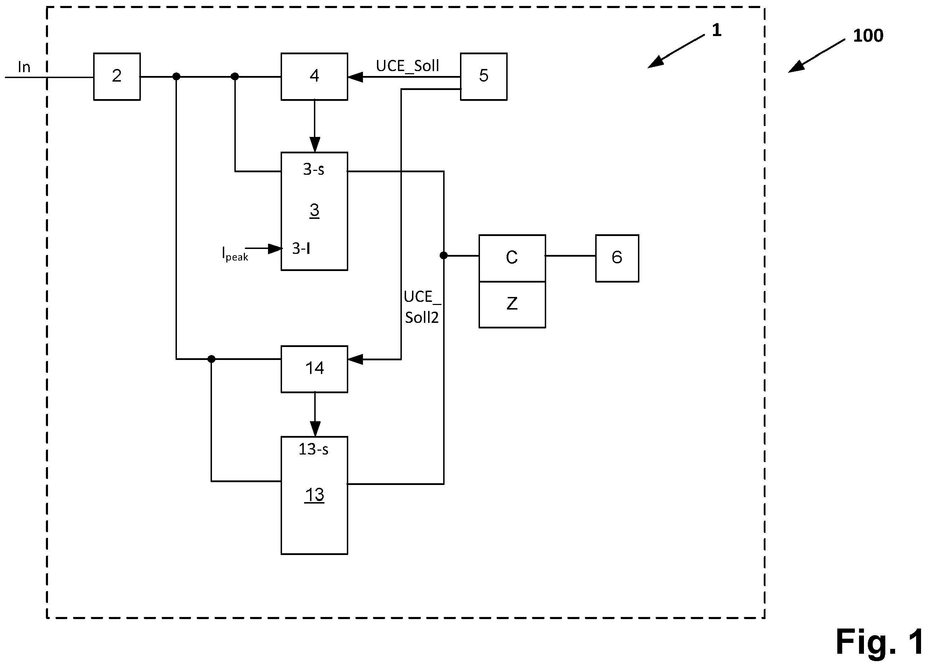

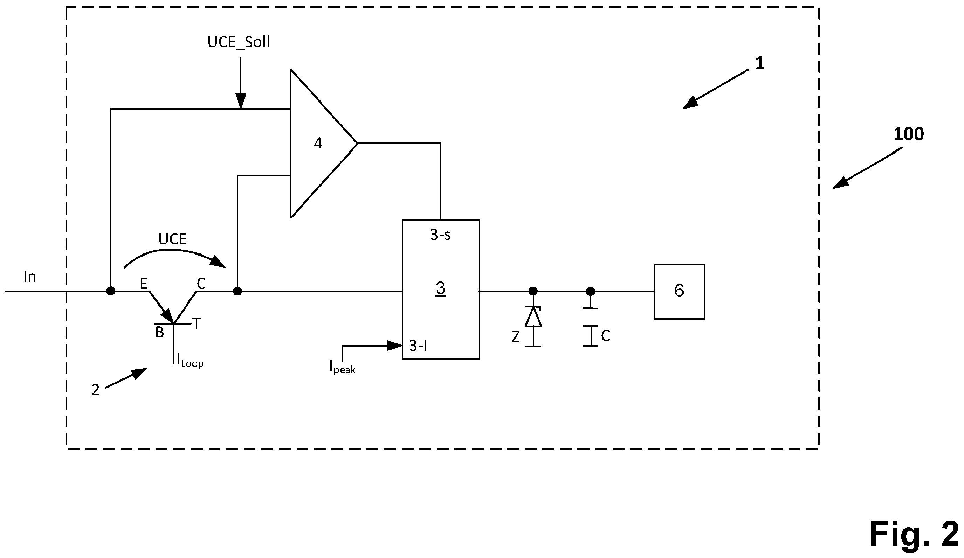

Fig. 1 zeigt ein Blockschaltbild des erfinderischen Gedankens, die Fig. 2 bis Fig. 4 zeigen Ausgestaltungen.
Zunächst soll auf Fig. 2 in Bezug zu Fig. 1 eingegangen werden.

Die Schaltreglerschaltung 1 umfasst zunächst einen Längsregler 2, der an den Eingang In angeschlossen ist. Der Längsregler 2 ist in Fig. 2 als Bipolartransistor T ausgestaltet, konkret als pnp-Transistor. Ebenso ist ein npn-Transistor möglich. Die drei Anschlüsse sind der Kollektor C, Basis B und Emitter E. Der Strom für die Kommunikation oder auch Schleifenstrom I_{Loop} genannt, fließt in die Basis B. Der Transistor T kann auch als Feldeffekttransistor (Unipolartransistor) ausgestaltet sein. Im Sinne dieser Anmeldung soll immer, wenn von einem Transistor die Rede ist, alternativ ein Bipolar- oder Unipolartransistor gemeint sein. Entsprechend soll Basis B als Gate, Kollektor C als Drain und Emitter E als Source im Falle vom Feldeffekttransistor bezeichnet sein.

Der Kollektor-Emitter-Spannungsabfall UCE wird auf die Eingänge eines Komparators 4 geführt. Die Schaltung 1 umfasst auch einen Mikrocontroller 5; im Mikrocontroller 5 wird ein Sollwert UCE_Soll für den Kollektor-Emitter-Spannungsabfall definiert. Dieser Sollwert UCE_Soll wird ebenso dem Komparator 4 zugeführt. Der Sollwert UCE_Soll wird einem Eingang des Komparators zugeführt und vom dort anliegenden Spannungswert abgezogen, in Fig. 2 von der Spannung am Emitter E. Der Komparator 4 vergleicht somit die Spannung am Kollektor C mit der Differenz von der Spannung am Emitter E und dem Sollwert. Ebenso könnte der Sollwert auch vom Spannungswert am Kollektor C abgezogen werden.

Der Sollwert UCE_Soll des Spannungsabfalls ist abhängig vom Schleifenstrom I_{Loop} und davon ob gerade eine digitale Kommunikation mittels HART stattfindet. Ist der Schleifenstrom groß, wird ein entsprechend größerer Spannungsabfall eingestellt. Findet eine digitale Kommunikation gerade statt, wird ebenfalls ein höherer Sollwert definiert. Die Umschaltung kann dabei alternativ über eine Auswertung des Basisstroms des Regeltransistors erfolgen oder über ein separates Steuersignal, wie es von einem Microcontroller erzeugt werden kann.

Dem Längsregler 2 nachgeschaltet ist ein DC-DC-Wandler 3, wobei im Beispiel der Kollektor C mit dem Eingang des DC-DC-Wandlers 3 verschaltet ist. Der DC-DC-Wandler 3 ist als Abwärtswandler ausgestaltet.

Der Ausgang des Komparators 4 ist mit einem Steuereingang 3-S des DC-DC-Wandlers 3 verbunden. Der DC-DC-Wandler 3 wird auf einen konstanten Kollektor-Emitter-Spannungsabfall geregelt. In anderen Worten wird der DC-DC-Wandler 3 so aktiviert, dass sich ein konstanter Kollektor-Emitter-Spannungsabfall UCE ergibt. Dabei kann der Rückkopplungs-Steuereingang des DC-DC-Wandlers 3 zur Aktivierung verwendet werden. Der Rückkopplungs-Steuereingang wird in den Datenblättern häufig mit "FB" bezeichnet. Über diesen Eingang wird üblicherweise die Ausgangsspannung eingestellt, vorliegend wird dieser aber zum Ansteuern verwendet - auch um die Anlaufzeit des DC-DC-Wandlers zu reduzieren.

Der DC-DC-Wandler 3 umfasst einen Eingang 3-I, mit dem der maximale Arbeitsstrom des Wandlers 3 gesetzt werden kann, beispielsweise um den Wirkungsgrad des Wandlers für eine Spule mit gegebenem Sättigungsstrom zu optimieren. Die Steuerung erfolgt durch die Parametrierung eines vom Wandler-Schaltkreis in die Spule eingeprägten Stroms Iₚₑₐₖ. Beispielsweise kann der Mikrocontroller 5, gegebenenfalls über einen Spannungsteiler, diesen Wert setzen. Mit einem größeren Ausgangsstrom kann der Energiespeicher C, siehe unten, schneller geladen werden.

Bei kleinem Arbeitsstrom kann die Effizienz erhöht werden, weil z.B. die Ummagnetisierungsverluste in der Spule verringert werden. Bei einem zu kleinen Arbeitsstrom kann jedoch am Eingang des DC-DC-Wandlers 3 nicht die für den stabilen Betrieb des Längsreglers erforderliche Mindestleistung entnommen werden. Wenn der DC-DC-Wandler 3 nicht ausreichend Energie dem Längsregler entnimmt, sinkt der Spannungsabfall UCE und somit kann der einzustellende Sollstrom oder das digitale HART-Signal in der Stromschleife verfälscht werden. Ein erhöhter Ausgangsstrom des DC-DC-Wandlers 3 verhindert dies, weil ein entsprechend erhöhter Eingangsstrom durch den DC-DC-Wandler 3 am Ausgang des Längsreglers entnommen wird. Im Fall eines erhöhten Schleifenstroms ist eine Optimierung auf den Wirkungsgrad gegebenenfalls verzichtbar, weil beim höheren Strom insgesamt eine höhere für den Betrieb verfügbare Leistung erreicht wird.

Dem DC-DC-Wandler 3 nachgeschaltet ist/sind ein oder mehrere Kondensatoren C. diese dienen zum einen der Spannungsstabilisierung nach dem DC-DC-Wandler und um etwaige Spannungsschwankungen auszugleichen. Zum anderen dient der Kondensator C als Energiespeicher für nachfolgenden Schaltungsteile, hier mit dem Bezugszeichen 6 markiert. Dies können beispielsweise der bereits angesprochene Mikrocontroller 5 sein, Schaltungsteile zur Durchführung und Aktivierung des HART-Signals, für ein etwaig angeschlossenes Display, Drahtloskommunikation (z.B. Bluetooth) oder auch zur Energieversorgung eines oder mehrerer an den Messumformer 100 angeschlossener Sensoren oder Flash-Speicher.

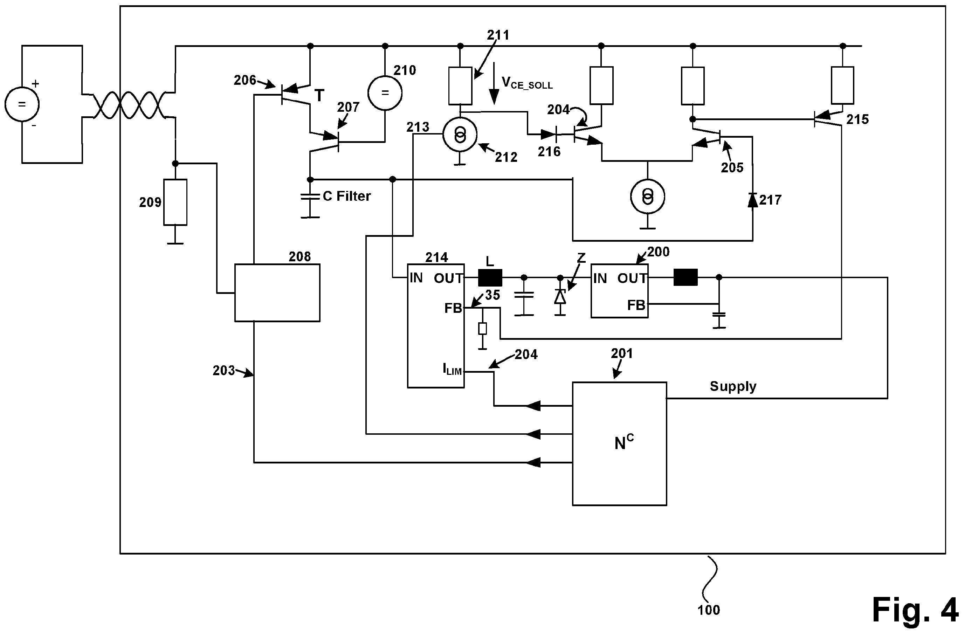

Zwischen DC-DC-Wandler 3 und Längsregler 2 geschaltet sind ein oder mehrere Kondensatoren (in Fig. 4 als C_{Filter} bezeichnet; im folgenden auch Filterkondensatoren genannt). Diese dienen zur Spannungsstabilisierung vor dem DC-DC-Wandler und um etwaige Spannungsschwankungen auszugleichen, welche durch den oder die DC-DC-Wandler 3 während des Schaltbetriebs erzeugt werden und gegebenenfalls Interferenzen oder Störsignale auf die Stromschleife einkoppeln könnten.

Dem DC-DC-Wandler 3 nachgeschaltet ist/sind ein oder mehrere Schaltungsteile zur einen Spannungsbegrenzung Z, beispielsweise eine oder mehrere Z-Diode.

Spannungsbegrenzung Z und Energiespeicher C sind parallelgeschaltet.

Der Längsregler 2 kann in Kaskodenschaltung ausgeführt sein. Dabei umfasst diese zwei in Reihe geschaltete Transistoren, wobei der eine in Emitterschaltung und der andere in Basisschaltung betrieben werden.

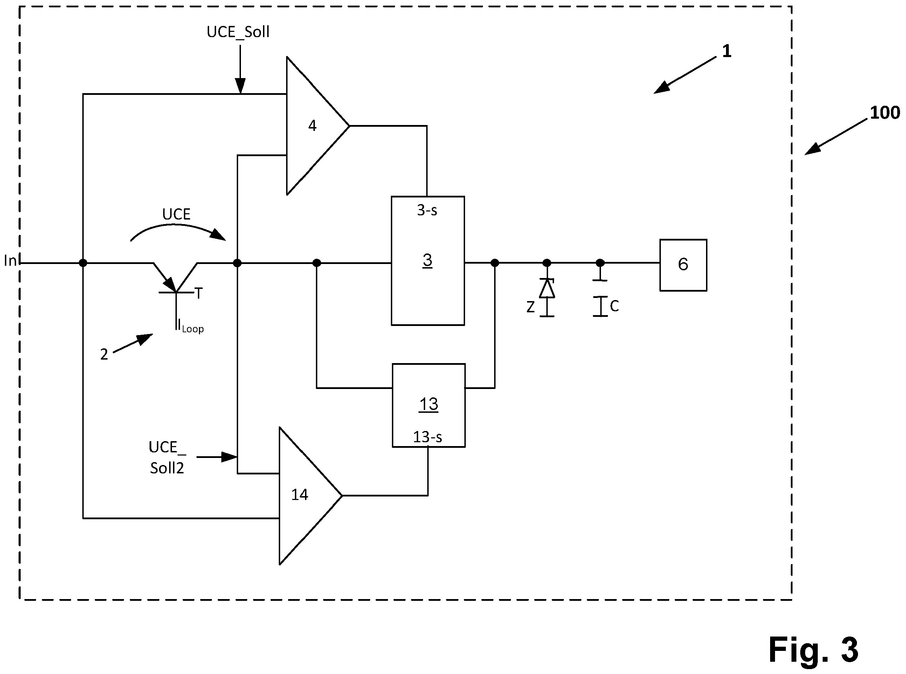

Fig. 3 zeigt eine Ausgestaltung, wobei im Folgenden nur auf die Unterschiede zur Ausgestaltung in Fig. 2 eingegangen wird.
Die Schaltung 1 umfasst einen zweiten Komparator 14, der parallel zum Komparator 4 geschaltet ist, d.h. die Spannungen am Kollektor C und Emitter E werden dessen Eingängen zugeführt. Der Mikrocontroller 5 definiert eine zweite Sollspannung UCE_Soll2 für den Kollektor-Emitter-Spannungsabfall. Die zweite Sollspannung UCE_Soll2 unterscheidet sich von der ersten Sollspannung UCE_Soll. Vorteilhafterweise ist die zweite Sollspannung UCE_Soll2 kleiner. Dieser zweite Sollwert UCE_Soll2 wird ebenso dem zweiten Komparator 14 zugeführt. Der Sollwert UCE_Soll2 wird einem Eingang des zweiten Komparators 14 zugeführt und vom dort anliegenden Spannungswert abgezogen, in Fig. 3 von der Spannung am Kollektor C. Der zweite Komparator 14 vergleicht somit die Spannung am Emitter E mit der Differenz von der Spannung am Kollektor C und dem zweiten Sollwert UCE_Soll2. Ebenso könnte der Sollwert UCE_Soll2 auch vom Spannungswert am Emitter E abgezogen werden.

Es entsteht somit eine Art Bypass, wobei überschüssige Energie, die am Eingang nicht durch den DC-DC-Wandler 3 verbraucht wird, zum Energiespeicher C abgeführt wird.

Der zweite Sollwert UCE_Soll2 des Spannungsabfalls ist abhängig vom Sättigungsstrom des Regeltransistors T im Längsregler 2 und vorteilhafterweise kleiner als der Sollwert UCE_Soll. Die Aufgabe des Bypasses besteht darin, z.B. bei Schwankungen der Spannung an der Stromschleife die Filterkondensatoren schnell ausreichend zu entladen. Sinkt beispielsweise die am Eingang des Längsreglers 2 anliegende extern zugeführte Spannung in großem Maß, so sinkt im gleichen Zug der Spannungsabfall am Längsregler 2 und die Schaltreglerschaltung 1 kann den gewünschten Schleifenstrom gegebenenfalls nicht mehr nachregeln. Es ist daher am Filterkondensator eine große Ladungsmenge zu entnehmen (d.h. ein großer Strom muss fließen), um den erforderlichen Spannungsabfall über den Längsregler wiederherzustellen. Der wirkungsgradoptimierte erste DC-DC-Wandler 3 ist gegebenenfalls mit seinen Spulen und Arbeitsströmen nicht in der Lage einen ausreichend großen Strom zu entnehmen, insbesondere wenn er auf einen sehr kleinen Arbeitsstrom eingestellt ist. Diese Aufgabe übernimmt der Bypass, der selbst als DC-DC-Regler 13 ausgeführt wird, jedoch mit erheblich höherem Arbeitsstrom und gegebenenfalls erheblich schlechterem Wirkungsgrad.

Dieser Betriebsfall (Schwankungen der extern zugeführten Versorgungsspannung) zeigt auch, dass die Verwendung des Filterkondensators am Ausgang des Längsreglers 2 für die Energiespeicherung für Betriebsmodi mit erhöhtem Leistungsbedarf mit erheblichen Nachteilen verbunden ist, weil dieser Energiespeicher sehr schnell entladen werden müsste (durch einen Bypass) und die dann darin gespeicherte Energie verloren ist.

Der Energiespeicher ist erst nach dem DC-DC-Wandler 3 platziert. Eine zwingende Voraussetzung für die Verwendung des Kondensators C am Ausgang des DC-DC-Wandlers 3 als Energiespeicher ist dabei, dass er mit einer variablen Spannung betrieben werden muss, da nur beim Entladen (sinkende Spannung) dort Energie entnommen werden kann. Das geht nur, wenn der DC-DC-Wandler 3 abweichend vom üblichen Betriebsmodus nicht mit einer Regelung auf eine konstante Ausgangsspannung betrieben wird.

Üblich im Stand der Technik ist das Platzieren des Energiespeicher-Kondensators direkt nach dem Längsregler 2 (in der Nomenklatur der vorliegenden Anmeldung beim "Filterkondensator"). Ein Entnehmen von Energie aus dem Filterkondensator (direkt am Ausgang des Längsreglers) demgegenüber würde beim Entladen den Spannungsabfall UCE am Regeltransistor T vergrößern und damit zu vergrößerten Spannungswerten und größeren Verlusten im Linearregler 2 führen, gerade in dem Fall, wenn das Energiebudget im Wiederaufladefall besonders kritisch ist.

Die Ausregelung des DC-DC-Wandlers 3 auf konstanten Spannungsabfall UCE optimiert damit auch auf einen besseren Wirkungsgrad beim Wiederaufladen des Energiespeichers, nachdem transient dort Leistung entnommen wurde.

Eine Optimierung des Wirkungsgrads eines DC-DC-Wandlers im Leistungsbereich von etwa 3,6 mA bei 12 V gelingt in der Praxis nur mit integrierten Schaltungen, in welchen sogenannte Synchrongleichrichter verbaut sind, welche Schalttransistoren zu sehr präzisen Zeitpunkten ein- und ausschalten können. In der Regel sind die auf dem Markt verfügbaren kommerziellen Bauteile ausgelegt auf eine konstant ausgeregelte Ausgangsspannung. Die integrierten Schaltungen verfügen dazu über einen Spannungs-Rückkoppel-Eingang, der so ausgeführt ist, dass hier die Ausgangsspannung (gegebenenfalls über einen Spannungsteiler) angeschlossen werden soll.

Diese Schaltregler werden zweckentfremdet, indem am Spannungs-Rückkopplungs-Eingang nicht die Ausgangsspannung des DC-DC-Wandlers 3 angeschlossen wird, sondern vielmehr ein Steuersignal, das z.B. von einem Komparator 4 auf Basis des gemessenen Status des Kollektor-Emitter-Spannungsabfall UCE am Längsregler generiert wird. Diese Zweckentfremdung ist insbesondere bei sogenannten Hysterese-DC-DC-Reglern effektiv, welche über einen Spannungs-Rückkopplungs-Eingang mit zwei internen Schwellwerten verfügen. Einerseits können diese Regler beim Arbeitspunkt 12 V / 3,6 mA besonders gute Wirkungsgrade erreichen. Zweitens können diese Regler dynamisch auf einen variablen Arbeitsstrom Iₚₑₐₖ im Schaltregler eingestellt werden (beispielsweise über einen Pin zum Anschluss eines externen Widerstands zur Parametrierung). Drittens arbeitet dieser Reglertyp über die Hysterese-Schwellen am Spannungs-Rückkopplungseingang mit einem quasidigitalen Arbeitsmodus, der von einem Komparator angesteuert werden kann.

Damit braucht für die Anwendung kein spezieller integrierter Schaltkreis entwickelt zu werden, sondern vielmehr gelingt die zweckentfremdete Verwendung kommerziell verfügbarer Standardbauteile mit Spannungs-Rückkopplungs-Eingang.

Dem Längsregler 2 nachgeschaltet ist eine Energie-Entnahmeschaltung 13. Die Energie-Entnahmeschaltung 13 ist dem DC-DC-Wandler 3 parallelgeschaltet. Die Energie-Entnahmeschaltung 13 ist beispielsweise zweiter DC-DC-Wandler ausgestaltet. In einer Ausgestaltung ist die Energie-Entnahmeschaltung 13 als Darlington mit zwei Bipolartransistoren ausgestaltet. Im Beispiel in Fig. 3 ist der Kollektor C mit dem Eingang der Energie-Entnahmeschaltung und den dort angeschlossenen Filterkondensatoren 13 verschaltet.

Der Ausgang der Energie-Entnahmeschaltung 13 ist wie auch der DC-DC-Wandler 3 mit der Spannungsbegrenzung Z bzw. dem Energiespeicher C verbunden.

Der erste Komparator 4 und/oder der zweite Komparator 14 können als diskret aufgebaute Differenzverstärker ausgestaltet sein.

Der erste DC-DC-Wandler 3 und/oder der zweite DC-DC-Wandler 13 als Ausführung der Energie-Entnahmeschaltung können als Hysteresewandler ausgestaltet sein. Beispielsweise über einen Rückkoppelwiderstand vom Ausgang des Komparators zum nichtinvertierenden Eingang des Komparators kann die gewünschte Hysterese eingestellt werden.

Der erste DC-DC-Wandler 3 und/oder der zweite DC-DC-Wandler 13 als Ausführung der Energie-Entnahmeschaltung können eine galvanische Trennung aufweisen.

Im Folgenden wird auf Fig. 4 Bezug genommen.

Dem DC-DC-Wandler wird mindestens ein weiterer DC-DC-Wandler 200 nachgeschaltet, welcher beispielsweise den Microcontroller 201 oder eine andere Schaltung versorgt. In diesem Fall ist es möglich, kurzzeitig aus dem Energiespeicherkondensator C eine gewisse Energiemenge zu entnehmen und diesen dabei um ein gewisses Maß zu entladen. Dieser Betriebsmodus wird dadurch möglich, da der DC-DC-Wandler 3 nicht mehr auf eine konstante Spannung am Ausgang (d.h. am Kondensator C) ausgeregelt wird, sondern auf eine konstante Spannung UCE am Längsregler. Die beanspruchte Schaltungstopologie ermöglicht somit den Einbau eines großen Energiespeichers.

Die Parallelschaltung der Spannungsbegrenzungsmaßnahmen am Kondensator C erreicht, dass die aus Sicherheitssicht zu garantierenden Bemessungsspannungen mit den funktionalen Spannungen identisch sind, da die Spannungsbegrenzerdioden auch funktional die Aufgabe übernehmen, ggf. im System überschüssige Leistung abzuführen. Dabei wird die überschüssige Leistung nur dann abgeführt, wenn der Energiespeicherkondensator C bereits voll aufgeladen ist.

Im Fall von geringer verfügbarer Leistung sinkt die Spannung am Kondensator und damit an den Zenerdioden. Gleichzeitig sinken in diesem Niederleistungsfall die sonst oft an den Begrenzungs-Zenerdioden stark störenden Leckströme. Die Zenerdioden können somit so ausgelegt werden, dass funktionale Spannung und sicherheitstechnisch garantierte Spitzenspannung eng beieinander liegen. Dies vereinfacht die eigensichere Auslegung der Transmitterschaltung, weil so z.B. Begrenzungsbauteile in kleinerer Baugröße zum Einsatz kommen können.

Ein Vorteil der DC/DC-Wandlerschaltung besteht darin, dass man den Längsregler jeweils beim minimal für die korrekte Funktion unvermeidlichen Spannungsabfall UCE betreiben kann und somit nur das absolute Minimum an Energie im Längsregler verheizt. Für den Fall, dass z.B. bei einem größeren Schleifenstrom von z.B. >10 mA ein höherer Spannungsabfall UCE erforderlich wird, wird am Komparator der zugehörige Soll-Spannungsabfall heraufgesetzt. Im Fall kleiner Schleifenströme kann gegebenenfalls mit einem kleineren UCE-Wert gearbeitet werden, ohne die Funktion des Linearreglers zu beeinträchtigen. Dies nutzt die Eigenschaft des Regeltransistors aus, dass bei kleinen Strömen die UCE-Sättigungsspannung deutlich kleiner ist als bei größeren Strömen.

Wird eine digitale HART-Kommunikation verwendet so ist ggf. ebenfalls eine größere UCE-Spannung erforderlich, weil ggf. der Schleifenstrom schneller oder genauer ausgeregelt werden muss. So kann für die nötige Dauer des HART-Kommunikationsbetriebs die UCE-Spannung erhöht werden. Dies ist insofern bedeutsam, da im HART-Betriebsfall nur für einen Bruchteil der Betriebszeit tatsächlich Daten gesendet werden.

Wird im System ein Microcontroller eingesetzt so ist diesem der in der Stromschleife eingestellte Strom I_loop bekannt, da dieser in der Regel über ein Steuersignal den Längsregler konfiguriert, beispielsweise über ein Steuersignal (203 aufgrund dessen der Basisstrom im Regeltransistor eingestellt wird. Der Microcontroller kann über ein Steuersignal die jeweils passende UCE-Sollspannung der DC/DC-Wandler vorgeben. Gleiches gilt für eine ggf. erfolgende Anhebung der UCE-Sollspannung im Fall des HART-Betriebs.

Alternativ kann die UCE-Sollspannung auch ohne ein separates Steuersignal des Microcontrollers verändert werden, beispielsweise über eine analoge Regelung auf Basis des Basisstroms im Regeltransistor.

Der Wirkungsgrad des DC-DC-Wandlers 3 ist für eine Spule mit gegebenem Sättigungsstrom abhängig vom gewählten Strom Iₚₑₐₖ, bis zu dem die Speicherinduktivität des DC-DC-Wandlers aufgestromt wird. Bei dem kritischen Fall 12 V / 3,6 mA ist ein kleiner Strom Iₚₑₐₖ vorteilhaft. Bei größeren eingestellten Strömen und/oder höheren Eingangsspannungen ist ein größeres Ipeak vorteilhaft, z.B. um die Energiespeicher C schneller zu laden, bzw. mehr Strom am Filterkondensator am Eingang des DC/DC-Wandlers zu entnehmen. Üblicherweise verfügen für die Parametrierung integrierte Schaltregler-ICs über Steuereingänge 204. Es wird über den entsprechenden Pin des integrierten DC-DC-Wandler-Schaltkreises über einen passenden Widerstand auf einen Sollstrom eingestellt. Ein großer Widerstand (bzw. ein offener Pin) entspricht beispielsweise dann einem großen Arbeitsstrom und ein kleiner Widerstand (an GND angeschlossener Pin) z.B. einem kleineren Arbeitsstrom.

Diese Einstellung wird dynamisch je nach Betriebsfall zu geändert, um die Schaltung je nach Betriebsmodus auf einen optimalen Wirkungsgrad oder eine ausreichend große am Längsregler entnommene Leistung einzustellen. Dazu wird z.B. mit einem Transistor oder entsprechendem Pin eines Microcontrollers zwischen offen floating und kurzschließen auf GND zu hin und her gewechselt und so zwischen einerseits minimalem Iₚₑₐₖ (besserer Wirkungsgrad, geringe entnehmbare Leistung) und maximalem Arbeitsstrom Iₚₑₐₖ (schlechterer Wirkungsgrad, mehr entnehmbare Leistung) umgeschaltet. Z.B. bei Überschreiten eines bestimmten Schwellwerts des Schleifenstroms von z.B. 10 mA, wie er auf der Steuerleitung für den Längsregler 203 ausgegeben wird.
Somit kann bei höheren Schleifenströmen der Eingriff der Bypass-Schaltung bzw. des zweiten DC-DC-Wandlers 13 vermieden werden, weil bereits der erste DC-DC-Wandler 3 die beim Schleifenstrom von z.B. >10 mA erforderlichen Leistungsmengen am Längsregler entnehmen kann. Dadurch wird der Gesamtwirkungsgrad optimiert.

Dabei kann ausgenutzt werden, dass der Microcontroller in der Regel über die von ihm erfolgende Parametrierung des Längsregler Kenntnis über den aktuellen Betriebsfall und die jeweils optimale Einstellung des Arbeitsstroms des DC-DC-Wandlers hat.

Für die Bewertung des Spannungsabfalls am Längsregler und die entsprechende Erzeugung des Steuersignals im Komparator zur Einspeisung im Spannungs-Rückkopplungs-Eingang des DC/DC-Regler-ICs ist eine genaue Messung des Spannungsabfalls am Regeltransistor erforderlich. Kollektor und Emitter werden z.B. bei Gleichspannungspegeln im Bereich der positiven Versorgungsspannung betrieben, z.B. bei +12 V, +30 V oder +60 V. Übliche Low-Power-Komparatoren sind jedoch für Betriebsspannungen von z.B. 1,8 V oder +3,3 V ausgelegt. Die präzise Messung hoher Spannungen bzw. von kleinen Differenzen hoher Spannungen erfordert deswegen ggf. den Einsatz von Präzisionswiderständen, die die Eingangsspannungen auf den zulässigen Pegelbereich einstellen. Dies limitiert die Genauigkeit und generiert erhöhte Bauteilekosten. Übliche kommerzielle Komparator-ICs für Spannungen von z.B. +30 V verfügen jedoch vielfach nicht über die in der vorliegenden Anwendung erforderlichen geringen Stromverbräuche.

Es wird ein diskret aufgebauten Differenzverstärker verwendet, um die Spannungsdifferenz UCE zu bewerten. Fig. 4 zeigt ein Beispiel einer solchen Ausführungsform. Diese Schaltung ist so ausgelegt, dass sie auf einen Betrieb bei hohen Eingangsspannungen am Komparator optimiert wird, beispielsweise durch Verwendung von zwei NPN-Transistoren 204, 205 in Common-Emitter-Topologie als Differenzverstärker, wobei die jeweiligen Basis-Anschlüsse an die beiden zu vergleichenden Spannungen angeschlossen werden. Wegen der hohen Eingangsspannungen ist dabei der Einsatz von zusätzlichen spannungsfesten Gleichrichterdioden 216, 217 an den beiden Basis-Anschlüssen vorteilhaft, da die Basis-Emitter Dioden üblicher Transistoren nicht für Revers-Spannungen von z.B. 30 V oder 60 V ausgelegt sind, die z.B. während des Anlaufs der Schaltung auftreten könnten. Die UCE-Sollspannungen können in diesem Fall über eine am Emitter des Regeltransistors angeschlossene Widerstandskette und eine z.B. vom Microcontroller über eine Steuerleitung 213 parametrierbare Konstantstromquelle 212 erzeugt werden. Dadurch wird der Einsatz von Präzisionswiderständen vermieden, welche bei Einsatz eines üblichen Niederspannungs-Komparators erforderlich werden.

Fig. 4 zeigt eine konkrete Ausführungsform von Fig. 2 in der Übersicht.

Der Längsregler-Transistor T wird hier durch eine Sequenz von zwei Transistoren in Kaskodenschaltung 206, 207 ausgeführt. Der Haupt-Regeltransistor 206 erhält von einer Reglerschaltung einen Basisstrom, der anhand des Spannungsabfalls an einem Shunt-Widerstand 209 so ausgeregelt wird, dass der Schleifenstrom I_loop in der Stromschleife den vom Microcontroller 201 im Steuersignal 203 kodierten Sollwert annimmt.

Im Ausführungsbeispiel sorgt ein Kaskodentransistor 207, dessen Basis von einer Konstantspannungsquelle 210 versorgt wird, für einen konstanten Arbeitspunkt des Hauptregeltransistors 206. Das Hauptziel der Erfindung ist, den Spannungsverlust am Längsregler so klein wie möglich zu halten, d.h. mit einem minimalen UCE-Wert zu arbeiten. Vor diesem Hintergrund erscheint auf den ersten Blick der Einsatz einer Kaskodenstufe mit zwei Transistoren 206, 207 als kontraproduktiv, da ja nun jeder von ihnen einen gewissen Spannungsabfall für eine korrekte Funktion benötigt. Entgegen der Intuition ist es jedoch in der Praxis vorteilhaft, mit einem zweiten Transistor 207 zu arbeiten, dessen Basis in Bezug zur Spannung am Emitter von Transistor 206 einen im wesentlichen konstanten Wert aufweist. Der Erfindung liegt die Erkenntnis zugrunde, dass man mit dieser Topologie hiermit auch bei erheblich kleineren UCE-Werten je Einzeltransistor arbeiten kann, ohne dass vom Schaltregler-IC 214 erzeugte Störsignale auf die Stromschleife auskoppeln. Bei Verwendung eines Einzeltransistors wären überproportional große UCE-Werte erforderlich, um die Einkopplung von Störsignalen vom Kollektor auf die Basis vom Transistor 206 über die sogenannte "Miller"-Kapazität zu kompensieren. Die Kaskodenstufe erlaubt damit mit kleineren Spannungsabfällen zu arbeiten von z.B. UCE = 0,4V für beide Transistoren bei einem Schleifenstrom I_loop von 3,6 mA, bei dem das Powerbudget besonders kritisch ist. Wichtig ist dabei jedoch, ggf. den Spannungsabfall bei höheren Schleifenströmen von z.B. 20 mA zu erhöhen, da bei einem erhöhten Strom I_loop aufgrund der Sättigungsspannungen in den Transistoren eine korrekte Funktion der Schaltung ggf. nur bei einem Spannungsabfall von z.B. UCE = 0,7V sichergestellt werden kann.

Am Ausgang des Längsreglers befindet sich der Filterkondensator C_Filter der gleichzeitig die Eingangsspannung des DC-DC-Regler-Schaltkreises 214 puffert. Der DC-DC-Wandler beinhaltet eine Spule L, und einen Ausgangskondensator C. Eine Zenerdiode Z ist parallel zum Ausgangskondensator C verschaltet.

Der Spannungsabfall UCE im Sinne dieser Anmeldung ergibt sich hier durch die Summe des Spannungsabfalls an beiden Transistoren 206, 207. Der Sollwert des Spannungsabfalls UCE_SOLL wird hier über eine parametrierbare Konstantstromquelle 212 mit einem Steuereingang 213, der von einem zur Variation des Soll-Spannungsabfalls UCE_Soll von einem Microcontroller 201 angesteuert wird. Über eine Variation des eingestellten Konstantstroms kann die am Widerstand 211 abfallende Spannung UCE_Soll gesteuert werden. Die Spannung am Widerstand 211 wird auf den ersten Eingang des diskret ausgeführten Komparators aufgeschaltet 204, während die Spannung am Ausgang des Längsreglers auf den zweiten Eingang 205 aufgeschaltet wird.

Der Ausgang des diskret ausgeführten Komparators 14 wird im Ausführungsbeispiel an den Steuereingang FB (3s) des Schaltregler-ICs 214 angeschlossen. Über eine Steuerleitung 204 wird ein Signal des Microcontrollers an das Schaltregler-IC 214 angeschlossen, um den Spitzenstrom Iₚₑₐₖ in der Spule L einzustellen. Der Microcontroller wird aus einem zweiten DC/DC-Wandler 200 versorgt, so dass die Spannung am Speicherkondensator C variieren kann, ohne die Systemfunktion zu beeinträchtigen.

In Fig. 4 ist der Übersicht halber nur ein DC-DC-Wandler aufgeführt. Die Schaltungstopologie des zweiten DC-DC-Wandlers mit geringerem Wirkungsgrad aber höheren Spitzenströmen zur Entladung des Filterkondensators C_Filter kann mit einem gleichartigen diskreten Differenzverstärker/Komparator realisiert werden.

In einer Ausführungsform wird neben der Stromquelle 212 auch die Spannungsquelle 210 der Kaskodenstufe abhängig vom Schleifenstrom und Betriebsfall (HART aktiv oder nicht) ähnlich wie der UCE-Sollwert auf größere oder kleinere Spannungen eingestellt.

### Bezugszeichenliste

- 1: Schaltreglerschaltung
- 2: Längsregler
- 3: DC-DC-Wandler
- 3-S: Steuereingang von 3
- 3-I: Stromsteuerungseingang von 3
- 4: Komparator
- 5: Mikrocontroller
- 6: weitere Schaltungsteile
- 13: DC-DC-Wandler
- 13-S: Steuereingang von 13
- 14: Komparator
- C: Kondensator
- Z: Spannungsbegrenzung
- T: Transistor
- B: Basis
- E: Emitter
- C: Kollektor
- I_peak: einstellbarer maximaler Arbeitsstrom von 3 in der Spule L
- I_Loop: Schleifenstrom
- In: Eingang
- UCE: Kollektor-Emitter-Spannungsabfall
- UCE_Soll: Sollwert für den Kollektor-Emitter-Spannungsabfall
- UCE_Soll2: zweiter Sollwert für den Kollektor-Emitter-Spannungsabfall
- 100: Feldgerät
- 206: Regeltransistor im Längsregler
- 207: Kaskodentransistor im Längsregler
- 213: Parametrierbare Konstantstromquelle
- 214: Integrierte Schaltreglerschaltung
- L: Spule des DC/DC-Wandlers 3
- 204: Steuerleitung zur Parametrierung des Spitzenstroms in der Spule L
- 200: Spannungs-Versorgungsschaltung
- 216,217: Schutzdioden am Eingang des Komparators
- 204,205,215: Transistoren in einer diskreten Ausführungsform des Komparators
- 210: Arbeitspunkteinstellungs-Schaltung für den Kaskodentransistor
- 208: Regelungsschaltung des Längsreglers
- 209: Shunt-Widerstand des Längsreglers
- 203: Steuersignal zur Parametrierung des Schleifenstroms im Längsregler
- C_Filter: Kondensator am Ausgang des Längsreglers und Eingang des DC/DC-Wandlers 3

## Patentansprüche

1. Schaltreglerschaltung (1), umfassend
- einen Längsregler (2) mit zumindest einem Regeltransistor (T) mit den Anschlüssen Kollektor (C), Basis (B) und Emitter (E), und
- ein DC-DC-Wandler (3), insbesondere ein Abwärtswandler, der dem Längsregler (2) nachgeschaltet ist,
wobei die Schaltreglerschaltung (1) so ausgestaltet ist, dass der DC-DC-Wandler (3) auf einen konstanten Kollektor-Emitter-Spannungsabfall (UCE) am Regeltransistor geregelt wird, insbesondere wird der DC-DC-Wandler (3) so aktiviert, dass sich ein konstanter Kollektor-Emitter-Spannungsabfall (UCE) ergibt.

2. Schaltreglerschaltung (1) nach Anspruch 1, weiter umfassend
- einen Komparator (4), wobei der Komparator den Kollektor-Emitter-Spannungsabfall (UCE) am Regeltransistor (T) mit einem Sollwert (UCE_Soll) vergleicht und ein Ausgang des Komparators (4) mit einem Steuereingang (3-S) des DC-DC-Wandlers (3) verbunden ist.

3. Schaltreglerschaltung (1) nach Anspruch 2, weiter umfassend
- einen Mikrocontroller (5, 201), der einen Sollwert (UCE_Soll) für den Kollektor-Emitter-Spannungsabfall vorgibt und an den Komparator (4) leitet, und Vergleichen des Sollwerts (UCE_Soll) des Kollektor-Emitter-Spannungsabfalls mit dem tatsächlichen Kollektor-Emitter-Spannungsabfall (UCE), insbesondere wird der Sollwert (UCE_Soll) für den Kollektor-Emitter-Spannungsabfall vom Spannungswert an einem Eingang des Komparators (4) abgezogen.

4. Schaltreglerschaltung (1) nach einem der vorherigen Ansprüche,
wobei der Steuereingang (3-S) des DC-DC-Wandlers (3) als Spannungs-Rückkopplungs-Steuereingang ausgestaltet ist.

5. Schaltreglerschaltung (1) nach einem der vorherigen Ansprüche, weiter umfassend einen Kondensator (C), der dem DC-DC-Wandler (3) nachgeschaltet ist.

6. Schaltreglerschaltung (1) nach einem der vorherigen Ansprüche, weiter umfassend einen Spannungsbegrenzung (Z), insbesondere eine Z-Diode, die dem DC-DC-Wandler (3) nachgeschaltet ist.

7. Schaltreglerschaltung (1) nach einem der vorherigen Ansprüche,
wobei der DC-DC-Wandler einen Eingang (204) zum Einstellen des maximalen Arbeitsstroms des DC-DC-Wandlers umfasst.

8. Schaltreglerschaltung (1) nach einem der vorherigen Ansprüche, weiter umfassend:
- einen zweiten Komparator (14) mit zwei Eingängen und einem Ausgang, wobei der Komparator den Spannungsabfall am Regeltransistor (T) mit einem zweiten Sollwert (UCE_Soll2), und
- eine Energie-Entnahmeschaltung (13), wobei der Ausgang des Komparators (14) mit der Energie-Entnahmeschaltung (13) verbunden ist.

9. Schaltreglerschaltung (1) nach Anspruch 8, weiter umfassend
wobei die Energie-Entnahmeschaltung (13) als zweiter DC-DC-Wandler ausgestaltet ist.

10. Schaltreglerschaltung (1) nach einem der vorherigen Ansprüche,
wobei der Längsregler (2) als Kaskodenschaltung ausgeführt ist.

11. Schaltreglerschaltung (1) nach einem der vorherigen Ansprüche,
wobei der erste und/oder der zweite Komparator (4, 14) als diskret aufgebauter Differenzverstärker ausgestaltet ist.

12. Schaltreglerschaltung (1) nach einem der vorherigen Ansprüche,
wobei der erste und/oder der zweite DC-DC-Wandler (3, 13) als Hysteresewandler ausgestaltet ist.

13. Schaltreglerschaltung (1) nach einem der vorherigen Ansprüche,
wobei der erste und/oder der zweite DC-DC-Wandler (3, 13) eine galvanische Trennung aufweist.

14. Feldgerät (100), insbesondere Messumformer,
umfassend ein Schaltreglerschaltung (1) nach zumindest einem der vorherigen Ansprüche.

15. Verfahren zur Stromversorgung eines Feldgeräts (100), umfassend die Schritte
- Setzen eines Sollwerts (UCE_Soll) für einen Kollektor-Emitter-Spannungsabfall eines Längsreglers (2), und
- Regeln eines DC-DC-Wandlers (3), insbesondere eines Abwärtswandlers, auf einen konstanten Kollektor-Emitter-Spannungsabfall am Längsregler (2), insbesondere Aktivieren des DC-DC-Wandlers (3) so dass sich ein konstanter Kollektor-Emitter-Spannungsabfall ergibt.

16. Verfahren nach Anspruch 15,
wobei der Sollwert (UCE_Soll) für den Kollektor-Emitter-Spannungsabfall in Abhängigkeit von einem Strom (I_{Loop}) in die Basis (B) oder dem im Emitter (E) des Längsreglers (2) eingestellt wird.

17. Verfahren nach Anspruch 15 oder 16,
wobei der Kollektor-Emitter-Spannungsabfall (UCE) in Abhängigkeit von einem Strom in die Basis des Regeltransistors (T) im Längsregler (206) aufgeprägten Signals oder einem Steuersignal (203) abhängig ist.

18. Verfahren nach einem der vorherigen Ansprüche, weiter umfassend den Schritt
- Vergleichen des Sollwerts (UCE_Soll) des Kollektor-Emitter-Spannungsabfalls mit dem tatsächlichen Kollektor-Emitter-Spannungsabfall (UCE), wobei insbesondere der Sollwert (UCE_Soll) vom Spannungswert an einem Eingang des Komparators abgezogen wird.

19. Verfahren nach einem der vorherigen Ansprüche, weiter umfassend den Schritt
- Einstellen des maximalen Arbeitsstroms (I_peak) am DC-DC-Wandler (3) in Abhängigkeit von einem Strom (I_{Loop}) in die Basis des Längsreglers (2) und/oder in Abhängigkeit von einem in den Strom in die Basis des Längsreglers aufgeprägten Signals.

20. Verfahren nach einem der vorherigen Ansprüche, weiter umfassend den Schritt
- Steuern einer Energie-Entnahmeschaltung (13) in Abhängigkeit von einer zweiten Sollspannung (UCE_Soll2) für den Kollektor-Emitter-Spannungsabfall (UCE).

21. Verfahren nach einem der vorherigen Ansprüche, weiter umfassend den Schritt
- Aufladen eines Energiespeichers (C) durch den und/oder die DC-DC-Wandler (3, 13).

22. Verfahren nach einem der vorherigen Ansprüche, weiter umfassend den Schritt
- Begrenzen der Spannung über dem und/oder den DC-DC-Wandlern (3, 13).
